# EUROPÄISCHE PATENTSCHRIFT

(11) **EP 2 216 383 B1**
(45) Veröffentlichungstag und Bekanntmachung des Hinweises auf die Patenterteilung: **02.01.2013**
(21) Anmeldenummer: 10150843.0
(22) Anmeldetag: 15.01.2010
(51) Int. Cl.: C09J 7/02, C09D 5/02, C09J 7/04, C09D 7/12

(54) **Verwendung eines Trennmittels mit nanodispersem Titandioxid**
Use of a release agent with dispersed nano sized titanium dioxide
Utilisation d'un agent antiadhésif avec dioxyde de titane de taille nanométrique dispersé

(30) Priorität: 30.01.2009 DE 102009006936
(43) Veröffentlichungstag der Anmeldung: 11.08.2010
(73) Patentinhaber: tesa SE, 20253 Hamburg (DE)
(72) Erfinder: Meier, Andreas Dr., 22417, Hamburg (DE); Sperling, Caroline, 20255, Hamburg (DE)

(56) Entgegenhaltungen:
- EP-A1- 0 774 443
- WO-A1-01/72918
- DE-A1- 1 594 146
- DE-A1-102005 029 722
- US-A- 2 971 863
- BOWEN P: "Particle Size Distribution Measurement from Millimeters to Nanometers and from Rods to Platelets", JOURNAL OF DISPERSION SCIENCE AND TECHNOLOGY, TAYLOR AND FRANCIS GROUP, NEW YORK, NY, US, vol. 23, no. 5, 1 January 2002 (2002-01-01), pages 631-662, XP009102859, ISSN: 0193-2691, DOI: 10.1081/DIS-120015368

## Beschreibung

Die Erfindung betrifft die Verwendung des Trennmittels als Schicht auf der offenen Rückseite eines einseitig mit einer Klebemasse ausgerüsteten Trägermaterials.

Als Trennmittel werden feste oder flüssige Stoffe bezeichnet, die die Adhäsionskräfte zwischen zwei aneinandergrenzenden Oberflächen (zum Beispiel Formteil/Form) verringern, das heißt, ihr Verkleben verhindern, indem sie zwischen beiden Oberflächen einen leicht trennbaren Film bilden (Abhäsivmittel).

Im Bereich der Klebebäder sind, um ein Abrollen der Klebebänder von der Rolle zu ermöglichen, silikonisierte Trennpapiere und -folien seit langem bekannt, die zwischen den einzelnen Lagen des Klebebands liegen, um ein Verkleben der Schichten auszuschließen. Derartige Trennpapiere und -folien, auch Liner genannt, finden breite Anwendung.

Daneben besteht die Möglichkeit, die Trennmittel direkt auf der Rückseite eines Klebebandträgers aufzubringen, um somit antiadhäsive Eigenschaften hervorzurufen. Das Abrollen des üblicherweise zu einer archimedischen Spirale aufgewickelten Klebebands wird erleichtert, und es verbleibt die Klebemasse auf der Unterseite des Klebebands, also auf der Seite, auf der die Klebemasse ursprünglich verankert war. Ein unerwünschter Übergang der Klebemasse auf die Rückseite beim Abrollen - dem Fachmann als Umspulen der Klebemasse bekannt - unterbleibt.

Man unterscheidet drei Haupttypen von Trennmitteln, auch Releasebeschichtungen genannt:
Zunächst gibt es Trennmittel auf Basis langkettiger Alkylgruppen. Beispiele sind Polyvinylstearylcarbamte, Polyethyleniminstearylcarbamide, Chrom-Komplexe von C₁₄-bis C₂₈-Fettsäuren and Stearyl-Copolymere (beispielsweise beschrieben in der DE 28 45 541 A).
Daneben existieren Acrylpolymere mit perfluorieten Alkylgruppen (US 3,318,852 A), die als Latex oder aus Lösungsmittel aufgebracht werden.
Die am weitesten verbreiteten Trennmittel sind Silikone oder Fluorsilikonverbindungen, die auf Poly(dimethyl-Siloxan) basieren. Diese werden bevorzugt eingesetzt, um die oben beschriebenen Trennpapiere herzustellen, indem Silikon auf den Träger des Trennpapiers aufgebracht wird.

Selbstklebende Abdeckbänder, im Folgenden als Abdeckklebeband bezeichnet, müssen einige wesentliche Eigenschaften aufweisen, damit sie die besonderen an sie gestellten Anforderungen erfüllen. Dies sind - ohne dass diese Aufstellung den Anspruch auf Vollständigkeit erhebt - eine geringe Dicke, eine hohe Zugfestigkeit (Höchstzugkraft), eine gute Dehnbarkeit (Reißdehnung), eine ausreichende aber nicht zu hohe Klebkraft, die rückstandsfreie Wiederablösbarkeit nach den Beanspruchungen der eigentlichen Anwendung, die gute Haftung von Anstrichstoffen auf der Rückseite, die Beständigkeit gegenüber Farbdurchschlag, die Beständigkeit gegenüber Feuchtigkeit und eine dosierte Klebkraft auf der eigenen Rückseite.
Während einige der Eigenschaften auf die Klebmasse oder andere Funktionsschichten des Abdeckklebebands zurückzuführen sind, so basieren die Dehnbarkeit und die Zugfestigkeit wesentlich auf den physikalischen Eigenschaften des verwendeten Trägermaterials.

Deshalb werden für Abdeckklebebänder bevorzugt Papierträger und dann solche eingesetzt, die durch die Art des verwendeten Zellstoffes, durch den Mahlgrad und durch bestimmte chemische Hilfsmittel eine definierte Zugfestigkeit und durch besondere Verfahrensschritte wie der Kreppung oder das Clupak-Verfahren mit einer definierten Dehnbarkeit ausgestattet sind.

Diese Rohstoffe und Verfahrensschritte sind ausschließlich der Kunst des Papiermachers überlassen und stehen dem Hersteller von Abdeckklebebändern nicht zur Verfügung, da dieser im Regelfall das Rohpapier als Basis der Abdeckklebebands zukauft.

Problematisch an den Abdeckklebebändern, insbesondere wenn diese vergleichsweise empfindliche Träger wie Papier oder wenig alterungsstabile Klebemassen auf Naturkautschukbasis aufweisen, ist, dass diese bei den bevorzugten Anwendungen im Außenbereich nicht alterungsstabil sind. Gerade die Naturkautschukklebemasse neigt durch die Einstrahlung von Sonnenlicht zum Abbau. Dies kann beispielsweise dazu führen, dass ein Entfernen des Klebebands vom Untergrund nicht möglich ist, ohne dass Klebemasserückstände auf diesem verbleiben, die aus einem kohäsiven Bruch in der gealterten Klebemasse resultieren.

Es ist daher Aufgabe der Erfindung, ein Trennmittel für die Verwendung als Schicht auf der offenen Rückseite eines einseitig mit einer Klebemasse ausgerüsteten Trägermaterials zur Verfügung zu stellen, das das Alterungsverhalten des Klebebands optimiert.

Gelöst wird diese Aufgabe durch die Verwendung gemäß Hauptanspruch 1. Gegenstand der Unteransprüche sind vorteilhafte Fortbildungen des Erfindungsgegenstandes.

Demgemäß betrifft die Erfindung die Verwendung eines Trennmittels als Schicht auf des offenen Rückseite eines einseitig mit einer Klebemasse ausgerüsteten Trägermaterials, wobei das Trennmittel fein- oder nanodisperses Titandioxid enthält.

Unter nanodispersem Titandioxid im Sinne der vorliegenden Erfindung werden Rutile, Anatase und amorphes Titandioxid mit einer bevorzugten Teilchengröße von 1 bis 40 nm, besonders bevorzugt 10 bis 25 nm verstanden.
Feindisperses Titandioxid liegt im erfinderischen Sinne in Form eines Agglomerats vor, wobei die Korngröße kleiner 10 µm, bevorzugt kleiner 5 µm ist.

Das Titandioxid absorbiert einfallendes UV-Licht. Befindet sich beispielsweise das Trennmittel mit dem Titandioxid auf einer Klebebandrückseite, so schützt das Trennmittel die darunter befindlichen Schichten, insbesondere die Klebemasse gegen die schädliche UV-Strahlung.
Gemäß einer ersten vorteilhaften Ausführungsform der Erfindung liegt der Anteil des Titandioxids im Trennmittel zwischen 2 und 15 Gew.-%, bevorzugt zwischen 2 und 10 Gew.-%, besonders bevorzugt zwischen 4 und 6 Gew.-%. Optimal sind Titandioxidkonzentrationen von 5 Gew.-%. Somit ist eine ausreichend gute UV-Absorption durch das Titandioxid sichergestellt.

Weiter vorzugsweise ist das Trennmittel für Licht im sichtbaren Bereich transparent, und zwar dergestalt, dass das in einer Schicht aufgebrachte Trennmittel vorzugsweise eine Transmission von größer 60 % aufweist, insbesondere eine Transmission größer 90 % bei einer Wellenlänge von 350 bis 1150 nm. Bei einer Transmission von größer 90 % wird im Allgemeinen von Transparenz gesprochen.
Mit dem Transmissionsgrad - bisweilen auch nur kurz als Transmission bezeichnet -, der in der Regel in % angegeben wird, ist das Verhältnis der auf der Rückseite eines mit Licht durchstrahlten Körpers ankommenden Lichtleistung zu der auf der Vorderseite eintreffenden Lichtleistung gemeint. Die Transmission wird beschnitten durch Reflektion und Absorption.
Es gilt also: Transmissionsgrad = (1 - Reflektionsgrad) x (1 - Absorptionsgrad).

Das Trennmittel ist als Schicht auf der offenen Rückseite eines einseitig mit einer Klebemasse ausgerüsteten Trägermaterials geeignet. Vorzugsweise erfolgt dabei der Auftrag des Trennmittels vollflächig.

Weiter vorzugsweise handelt es sich bei dem Klebebandträger um einen Papierträger.
In einer vorteilhaften Ausgestaltung der Erfindung liegt das Flächengewicht des Papierträgers bei 35 bis 250 g/m², bevorzugt bei 50 bis 200 g/m², ganz bevorzugt bei 70 bis 150g/m²_{.}

Weiter vorzugsweise kann der Klebebandträger aus einem transluzenten oder transparenten Folienträger bestehen, und zwar dergestalt, dass der Klebebandträger vorzugsweise eine Transmission von größer 60 % aufweist, insbesondere eine Transmission größer 90 % bei einer Wellenlänge von 350 bis 1150 nm.

Gemäß einer weiteren vorteilhaften Ausführungsform der Erfindung ist das Trennmittel mit 4 g/m² bis 20 g/m², bevorzugt 5 g/m² bis 7 g/m² auf den Klebebandträger aufgebracht. Als Folie können beispielsweise die üblichen Polyolefinträger eingesetzt werden.

Die Dicke der Trennmittelschicht liegt bevorzugt zwischen 0,1 und 2 µm.

Die Zusammensetzung des Trennmittels (ohne Titandioxid) orientiert sich an den üblichen Standard-Trennmitteln. Diese Mischungen bestehen aus den Komponenten Styrol-Butadien-Latex (zum Beispiel DOW-LATEX 714.49), wässrige Acrylpolymerdispersion (zum Beispiel PRIMAL 1253.40) und wässrige Polymerdispersionen auf Basis von Styrol und Monostearylamid.
In einer weiteren vorteilhaften Ausführungsform weist die Mischung die folgende Zusammensetzung auf (wobei der Anteil Titandioxid hierbei anteilsmäßig nicht berücksichtigt ist):

| | |
|---|---|
| Styrol-Butadien-Latex | 36 bis 80 Gew.-% |
| wässrige Acrylpolymerdispersion | 10 bis 20 Gew.-% |
| wässrige Polymerdispersionen auf Basis von Styrol und Monostearylamid | 0 bis 59 Gew.-% |

Typische Trennschichten aus der beschriebenen Mischung setzen sich wie folgt zusammen:
- Styrol-Butadien-Latex (zum Beispiel DOW-LATEX 714.49)
   72 bis 73,4 Gew.-%
- wässrige Acrylpolymerdispersion (zum Beispiel PRIMAL 1253.40)
   19 bis 20% Gew.-%;
- wässrige Polymerdispersionen auf Basis von Styrol und Monostearylamid
   7,6 bis 8 Gew.-%

Bevorzugt sind auch Trennmittel auf Basis Carbamat, denen das Titandioxid zugesetzt wird. Ein typischer Vertreter ist hierbei das Escoat P20 der Firma Mayzo Inc. Diese Trennmittel werden insbesondere auf Folienträger eingesetzt.

Escoat P20 ist Polyvinyl-Octadecyl-Carbamat (PVODC) in Toluol der Zusammensetzung [CH2-CH(OCONHC18H37)-]ₙ. Das Molekulargewicht ist [339]ₙ oder > 60.000, der Feststoffgehalt 10 Gew.-%.

Grundsätzlich ist der Gedanke, in einem Trennmittel ein Titandioxid einzusetzen, mit allen gängigen Trennmitteln umzusetzen.

Das Klebeband ist einseitig mit einer Klebemasse, bevorzugt Selbstklebmasse beschichtet. Als Selbstklebemasse eignen sich im Prinzip alle gängigen haftklebrigen Systeme. Darunter fallen harzabgemischte Naturkautschukselbstklebemassen, Acrylsäureestercopolymerisate (mit und ohne Zusatz von Klebharzen), Synthesekautschukmassen (zum Beispiel auf Basis von Butylkautschuk, Polyisobutylen, Styrol-Butadien-Copolymeren, hydrierten und nicht hydrierten Styrolblockcopolymeren, Ethylen-Propylen Copolymeren, amorphen Poly-α-olefinen, Polyethylenvinylacetatcopolymeren oder Acrylatblockcopolymere), Polyurethanhaftklebemassen und/oder Siliconhaftklebemassen.
Die Selbstklebemassen können aus Lösung, aus der Schmelze oder - sofern so erhältlich - als wässrige Dispersion mit geeigneten Beschichtungshilfsmitteln auf die Polyolefinfolie aufgetragen werden.
Besonders geeignet sind sehr kohäsive Selbstklebemassen mit Schälkräften von Stahl von 1 bis 8 N/cm gemäß AFERA 5001, Methode A.
Auftragsstärken der Selbstklebemassen betragen vorzugsweise 5 bis 100 g/m², weiter bevorzugt 8 bis 50 g/m².

Bevorzugt werden harzabgemischte Naturkautschukselbstklebemassen verwendet.

Alle Klebmassen können mit Weichmachern, Klebharzen oder anderen Additiven wie Alterungsschutzmitteln und Füllstoffen abgemischt sein.

Die Verankerung der Selbstklebemasse kann durch eine Beschichtung mit einem Primer als Verankerungshilfe verbessert werden. Dazu kann auch eine Corona- oder eine Flammvorbehandlung des zu beschichtenden Trägers dienen.

Die Menge der Klebstoffschicht beträgt bevorzugt 10 bis 120 g/m², vorzugsweise 25 bis 100 g/m² (gemeint ist die Menge nach einer eventuell notwendigen Entfernung von Wasser oder Lösungsmittel; die Zahlenwerte entsprechen auch in etwa der Dicke in µm).

Wahlweise kann das Abdeckklebeband als Stanzling auf einem Trennpapier oder einer Trennfolie (das sind typischerweise mit Silikonen beschichtete Papiere oder Kunststofffolien) dargereicht sein.
Der allgemeine Ausdruck "Klebeband" umfasst im Sinne dieser Erfindung daher alle flächigen Gebilde wie in zwei Dimensionen ausgedehnte Folien oder Folienabschnitte, Bänder mit ausgedehnter Länge und begrenzter Breite, Bandabschnitte, Stanzlinge und dergleichen.

Das Trennmittel ist hervorragend als Release auf einem Klebebandträger geeignet. Die oben genannten Beimischungen von nanodispersem Titandioxid haben - und dies ist ein sehr großer Vorteil - weder negative Auswirkungen auf den Fertigungsprozess des Klebebands (beispielsweise die Ausrüstung des Papierträgers mit dem Trennmittel), noch werden die klebtechnischen Eigenschaften des Papierklebebandes signifikant beeinflusst (zum Beispiel Abrollkraft, Klebkraft auf der eigenen Rückseite). Genauso wenig haben die Beimischungen einen erkennbaren Einfluss auf den Farbton des Klebebandes.
Durch die Verwendung von fein- oder nanodispersem Titandioxid insbesondere mit Partikelgrößen < 10 µm beziehungsweise < 40 nm bleibt das Trennmittel für Licht im sichtbaren Bereich transparent, das heißt, die Farbe des Klebebandes bleibt unverändert. Das ist insofern wichtig, als das für den Anwender mit der Farbe oftmals eine Funktion verbunden ist. So wird zum Beispiel ein Papierklebeband mit einer blauen Farbe vom Anwender als witterungsstabiles Klebeband für Anwendungen im Außenbereich eingestuft.
Die dem Trennlack zugesetzte Menge Titandioxid sowie die Schichtdicke des Trennlacks - also letztlich die absolute Menge an nanodisperem Titandioxid im Trennlack - bestimmt den Absorptionsgrad an UV-Licht.

Die Trägerschichtdicke oder das Trägergewicht spielen keine entscheidende Rolle; für höhere Gewichte oder UV-Licht undurchlässige Träger macht eine Titandioxidbeschichtung keinen Sinn, da das UV-Licht bereits durch den Träger am Auftreffen auf die bevorzugt eingesetzte Naturkautschukmasse gehindert wird.

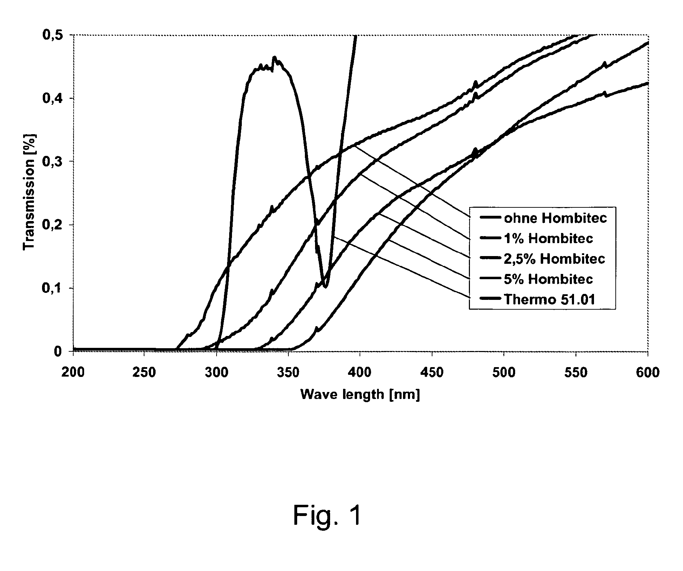

Die Wirksamkeit des nanodispersem Titandioxid im Trennlack als UV-Lichtabsorber ist in der Figur 1 dargestellt. Hier wurden Mischungen eines Trennlacks mit unterschiedlichen nanodispersen Titandioxidpartikelkonzentrationen hergestellt. Bei dem hier verwendeten nanodispersen Titandioxid handelt es sich um eine Dispersion von nanokristallinem Titandioxid in Wasser (Feststoffanteil von 33 Gew.-%) mit dem Markennamen "Hombitec" der Firma Sachtleben GmbH. Die Lacke (mit der Zusammensetzung DOW-LATEX 714.49 72 Gew.-%, PRIMAL 1253.40 20 Gew.-%, wässrige Polymerdispersionen auf Basis von Styrol und Monostearylamid 8 Gew.-%) mit den unterschiedlichen Titandioxidanteilen wurden auf einen imprägnierten, cremefarbenen Papierträger (Trägergewicht: 56 g/m²) ausgestrichen und die UV-VIS Spektren der Träger aufgenommen.

Der konzentrationsabhängige Effekt in der UV-Absorption ist deutlich zu erkennen: Je höher der Titandioxidanteil (Hombitec), umso ausgeprägter ist die Absorption zwischen 270 nm und 400 nm. Zum Vergleich ist das UV-VIS-Spektrum einer Standardkautschukmasse abgebildet, die eine deutliche Absorptionsbande bei 370 nm aufweist. Die Absorption in diesem Bereich wird durch das nanodisperse Titandioxid deutlich reduziert. Ist die Absorption in diesem Bereich maßgebend für den UV-Licht bedingten Abbau der Kautschukmasse, dann verbessert sich die UV Lichtbeständigkeit mit 5 Gew.-% Titandioxid um einen Faktor 6.

Das Trennmittel sowie das Trennmittel enthaltende Abdeckklebebänder werden nachfolgend in bevorzugter Ausführung anhand mehrerer Beispiele beschrieben, ohne damit ebenfalls die Erfindung irgendeiner Beschränkung unterwerfen zu wollen.

### Beispiel 1

### Zusammensetzung des Trennmittels für Papier-Abdeckklebebänder:

| | |
|---|---|
| DOW-LATEX 714.49 | 72 Gew.-% |
| PRIMAL 1253.40 | 20 Gew.-% |
| wässrige Polymerdispersionen auf Basis von Styrol und Monostearylamid | 8 Gew.-% |

Erfindungsgemäß setzt sich das Trennmittel dann zu 95 Gew.-% der angegebenen Mischung und 5 Gew.-% Titandioxid zusammen.

### Typisches Trennmittel für Folien-Abdeckklebebänder

| | |
|---|---|
| Escoat P20 | 100 Gew.-% |

Erfindungsgemäß setzt sich das Trennmittel dann zu 95 Gew.-% der angegebenen Mischung und 5 Gew.-% Titandioxid zusammen.

## Patentansprüche

1. Verwendung eines Trennmittels als Schicht auf der offenen Rückseite eines einseitig mit einer Klebemasse ausgerüsteten Trägermaterials, wobei das Trennmittel nanodisperses Titandioxid enthält, das eine Teilchengröße von 1 bis 40 nm aufweist und wobei das Trennmittel mit 4 g/m² bis 20 g/m² auf den Klebebandträger aufgebracht ist.

2. Verwendung nach Anspruch 1,
**dadurch gekennzeichnet, dass**
der Anteil des Titandioxids im Trennmittel zwischen 2 und 15 Gew.-%, bevorzugt zwischen 2 und 10 Gew.-%, besonders bevorzugt zwischen 4 und 6 Gew.-% liegt.

3. Verwendung nach Anspruch 1 oder 2,
**dadurch gekennzeichnet, dass**
das Titandioxid eine Teilchengröße von 10 bis 25 nm aufweist.

4. Verwendung eines Trennmittels nach zumindest einem der vorherigen Ansprüche,
**dadurch gekennzeichnet, dass**
das Trennmittel für Licht bei einer Wellenlänge von 350 bis 1150 nm transparent ist, und zwar dergestalt, dass das in einer Schicht aufgebrachte Trennmittel eine Transmission von größer 60 % aufweist, wobei die Dicke der Trennmittelschicht zwischen 0,1 und 2 µm liegt.

5. Verwendung eines Trennmittels nach Anspruch 1, wobei es sich bei dem Klebebandträger um einen Papierträger oder um einen transluzenten oder transparenten Folienträger handelt, und zwar dergestalt, dass der Klebebandträger vorzugsweise eine Transmission von größer 60 % aufweist, insbesondere eine Transmission größer 90 % bei einer Wellenlänge von 350 bis 1150 nm.

6. Verwendung eines Trennmittels nach Anspruch 1 oder 5,
**dadurch gekennzeichnet, dass**
das Trennmittel mit 5 g/m² bis 7 g/m² auf den Klebebandträger aufgebracht ist.

7. Verwendung eines Trennmittels nach zumindest einem der Ansprüche 1, 5 oder 6,
**dadurch gekennzeichnet, dass**
die Dicke der Trennmittelschicht zwischen 0,1 und 2 µm liegt.

## Claims

1. Use of a release agent as layer on the open reverse side of a carrier material furnished single-sidedly with an adhesive, the release agent comprising nanodisperse titanium dioxide which has a particle size of 1 to 40 nm, and the release agent being applied at 4 g/m² to 20 g/m² to the adhesive tape carrier.

2. Use according to Claim 1, **characterized in that** the fraction of the titanium dioxide in the release agent is between 2% and 15% by weight, preferably between 2% and 10% by weight, more preferably between 4% and 6% by weight.

3. Use according to Claim 1 or 2, **characterized in that** the titanium dioxide has a particle size of 10 to 25 nm.

4. Use of a release agent according to at least one of the preceding claims, **characterized in that** the release agent is transparent for light at a wavelength of 350 to 1150 nm, such that the release agent applied in a layer has a transmission of greater than 60%, the thickness of the release agent layer being between 0.1 and 2 µm.

5. Use of a release agent according to Claim 1, the adhesive tape carrier being a paper carrier or a translucent or transparent film carrier, such that the adhesive tape carrier preferably has a transmission of greater than 60%, more particularly a transmission of greater than 90% at a wavelength of 350 to 1150 nm.

6. Use of a release agent according to Claim 1 or 5, **characterized in that** the release agent is applied at 5 g/m² to 7 g/m² to the adhesive tape carrier.

7. Use of a release agent according to at least one of Claims 1, 5 and 6, **characterized in that** the thickness of the release agent layer is between 0.1 and 2 µm.

## Revendications

1. Utilisation d'un agent antiadhésif sous la forme d'une couche sur le côté arrière exposé d'un matériau support muni d'une masse adhésive d'un côté, l'agent antiadhésif contenant du dioxyde de titane nanodispersé qui présente une taille de particule de 1 à 40 nm et l'agent antiadhésif étant appliqué sur le support de bande adhésive à hauteur de 4 g/m² à 20 g/m².

2. Utilisation selon la revendication 1, **caractérisée en ce que** la proportion de dioxyde de titane dans l'agent antiadhésif est comprise entre 2 et 15 % en poids, de préférence entre 2 et 10 % en poids, de manière particulièrement préférée entre 4 et 6 % en poids.

3. Utilisation selon la revendication 1 ou 2, **caractérisée en ce que** le dioxyde de titane présente une taille de particule de 10 à 25 nm.

4. Utilisation d'un agent antiadhésif selon au moins l'une quelconque des revendications précédentes, **caractérisée en ce que** l'agent antiadhésif est transparent pour la lumière à une longueur d'onde de 350 à 1 150 nm et ce de manière à ce que l'agent antiadhésif appliqué en une couche présente une transmission supérieure à 60 %, l'épaisseur de la couche d'agent antiadhésif étant comprise entre 0,1 et 2 µm.

5. Utilisation d'un agent antiadhésif selon la revendication 1, dans laquelle le support de bande adhésive est un support papier ou un support en forme de feuille translucide ou transparent, et ce de manière à ce que le support de bande adhésive présente de préférence une transmission supérieure à 60 %, notamment une transmission supérieure à 90 % à une longueur d'onde de 350 à 1 150 nm.

6. Utilisation d'un agent antiadhésif selon la revendication 1 ou 5, **caractérisée en ce que** l'agent antiadhésif est appliqué sur le support de bande adhésive à hauteur de 5 g/m² à 7 g/m².

7. Utilisation d'un agent antiadhésif selon au moins l'une quelconque des revendications 1, 5 ou 6, **caractérisée en ce que** l'épaisseur de la couche d'agent antiadhésif est comprise entre 0,1 et 2 µm.
